Europäisches Patentamt

European Patent Office

Office européen des brevets

(19)

(11) Veröffentlichungsnummer: **0 219 735**
**B1**

(12) **EUROPÄISCHE PATENTSCHRIFT**

(45) Veröffentlichungstag der Patentschrifft:
28.02.90

(51) Int. Cl. ⁵: **H 02 M   3/335**

(21) Anmeldenummer: 86113574.7

(22) Anmeldetag: 02.10.86

(54) Schaltungsanordnung zur Spitzenstromreduzierung in einem Sperrwandler-Schaltnetzteil.

(30) Priorität: 17.10.85 DE 3537057

(43) Veröffentlichungstag der Anmeldung:
29.04.87 Patentblatt 87/18

(45) Bekanntmachung des Hinweises auf die Patenterteilung:
28.02.90 Patentblatt 90/09

(84) Bennante Vertragsstaaten:
AT CH DE FR GB IT LI NL SE

(56) Entgegenhaltungen:
EP-A-0 046 515
EP-A-0 135 119
DE-A-3 121 638

(73) Patentinhaber: Siemens Aktiengesellschaft
Wittelsbacherplatz 2
D-8000 München 2 (DE)

(72) Erfinder: Peruth, Günther, Dipl.-Ing. (FH)
Franz-Wolter-Strasse 13
D-8000 München 81 (DE)

EP 0 219 735 B1

## Beschreibung

Die Erfindung betrifft eine Schaltungsanordnung für ein Sperrwandler-Schaltnetzteil nach dem Oberbegriff des Anspruchs 1.

Sperrwandler-Schaltnetzteile besitzen im allgemeinen einen weiten Regelbereich für Netzwechselspannungen von 90 bis 270 V. Neben der Konstanz der Sekundärspannung gegen sekundäre Lastschwankungen und primäre Netzspannungsschwankungen ist der Schutz gegen Überlast und Kurzschluß über den gesamten Spannungsbereich zu gewährleisten.

Es ist allgemein bekannt, daß eine solche Schutzmaßnahme entweder über eine Spannungsüberwachung auf der Sekundärseite oder eine Stromüberwachung auf der Primärseite erfolgen kann. Um die notwendige Nutzleistung zu erreichen, muß – bedingt durch die magnetische Sättigung des Transformators des Schaltnetzteils – der Stromgrenzwert größer als der für die minimale Spannung sich ergebende Maximalstrom sein. Soll ein Regelbereich im Bereich der oben angegebenen Spannungsgrenzwerte von 90 bis 270 V gewährleistet sein, so ergibt sich ein Spannungsverhältnis von 3 : 1, woraus ein entsprechend hoher Wert der Grenzleistung resultiert. Der maximale Stromwert führt daher über den gesamten Spannungsbereich zu einer erheblichen Überlastung, was im Einzelfall sogar bis zur Zerstörung führen kann. Dem ist nur so sicher zu begegnen, daß ein weit überdimensionierter Transformator verwendet und bei kleinen Spannungen mit einem schlechten Wirkungsgrad gearbeitet wird. Darüber hinaus müssen auch weitere Bauelemente überdimensioniert werden.

Eine derartige Überdimensionierung kann bei einer Schaltungsanordnung für ein Sperrwandler-Schaltnetzteil, wie es aus EP-A-0 135 119 bekannt und im Oberbegriff des Anspruchs 1 angegeben ist, dadurch vermieden werden, daß eine von der Primärspannung über einen Spannungsteiler beaufschlagte Korrekturstufe vorgesehen wird, die das Ansteuern des elektronischen Schalters beeinflußt. Durch die Korrekturstufe kann entweder die Zeitkonstante einer den elektronischen Schalter über den vorgeschalteten Pulsweitenmodulator steuernden Strom-Spannungsstufe oder die Ausgangsgröße einer Regelstufe, die ebenfalls als Steuergröße dem Pulsweitenmodulator zugeführt wird, begrenzt werden. Eine Anlaufschaltungsstufe ist in dieser Veröffentlichung jedoch nicht vorgesehen.

Schaltungsanordnungen für Sperrwandler-Schaltnetzteile mit einer Anlaufschaltung sind aus der EP-A-0 046 515 oder DE-A-3 347 930 bekannt. Derart aufgebaute Sperrwandler-Schaltnetzteile weisen den eingangs erwähnten weiten Regelbereich für Netzwechselspannungen von 90 bis 270 V auf. Von eine Spitzenstromreduzierung in Abhängigkeit von der Netzspannung ist bei diesen bekannten Schaltungsanordnungen jedoch nicht die Rede.

Ausgehend von diesem bekannten Stand der Technik liegt der Erfindung daher die Aufgabe zugrunde, eine Schaltungsanordnung für ein Sperrwandler-Schaltnetzteil mit Anlaufschaltung anzugeben, bei der eine Spitzenstromreduzierung in Abhängigkeit von der Netzspannung in einfacher Weise realisierbar ist.

Diese Aufgabe wird durch die kennzeichnenden Merkmale des Anspruchs 1 gelöst.

Die Erfindung wird im folgenden anhand von Figuren näher erläutert. Es zeigen:

Fig. 1    ein Blockschaltbild des prinzipiellen Aufbaus der Schaltungsanordnung gemäß der Erfindung, und

Fig. 2    ein detailliertes Schaltbild der erfindungsgemäßen Schaltungsanordnung.

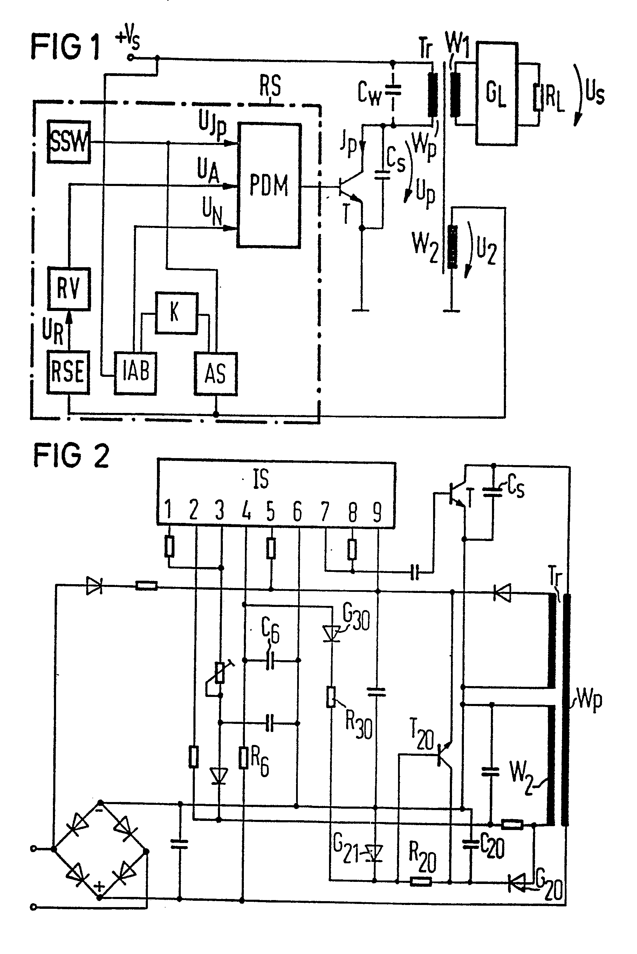

Im Blockschaltbild nach Fig. 1, das den grundsätzlichen Aufbau eines beispielsweise aus der DE-A-3 312 209 bekannten Sperrwandler-Schaltnetzteils zeigt, ist ein als Stellglied dienender Leistungstransistor T mit seiner Emitter-Kollektor-Strecke in Serie zu einer Primärwicklung Wp eines Transformators Tr geschaltet. Eine diese Serienschaltung betreibende Gleichspannung +Vs wird durch Gleichrichtung der Netzwechselspannung gewonnen. Im Falle eines npn-Transistors als Schalter T liegt der Emitter an Bezugspotential, der Kollektor an der Primärwicklung Wp des Transformators Tr und das andere Ende der Primärwicklung Wp an der Spannung +Vs. Die Emitter-Kollektor-Strecke des Transistors T ist von einem Kondensator Cs überbrückt, wobei weiterhin über der Primärwicklung Wp eine parasitäre Kapazität Cw liegt. Der Transistor T wird an seiner Basis von einer noch zu erläuternden Regelschaltung RS angesteuert.

Eine erste Sekundärwicklung W1 des Transformators Tr bildet die eigentliche Sekundärseite des Schaltnetzteil-Transformators Tr, welche über einen Gleichrichter GL ein schematisch durch seine Last RL angedeutetes elektrisches Gerät speist, in das eine Sekundärspannung Us eingespeist wird.

Eine zweite Sekundärwicklung W2 des Transformators Tr dient als Sensor für die Regelschaltung RS und liegt mit einem Ende an Bezugspotential und mit dem anderen Ende am Eingang der Regelschaltung RS.

Die Regelschaltung RS enthält ein den Transistor T steuerndes und als Pulsdauer-Modulator ausgebildetes Ausgangsschaltungsteil PDM sowie zwei durch die Sensorwicklung W2 gesteuerte Eingangsschaltungsteile, wobei ein Eingangsschaltungsteil RSE zur Erzeugung einer Regelspannung UR dient und über einen Regelverstärker RV ein Steuersignal UA für den Pulsdauer-Modulator PDM liefert. Ein weiteres Eingangsschaltungsteil AS stellt eine Anlaufschaltungsstufe dar, mit der eine Einschalthilfe vorgesehen ist, die einen sicheren Anlauf des Schaltnetzteils nach dem Einschalten gewährleistet und sich anschließend abschaltet. Eine derartige Einschalthilfe ist aus der DE-A-3 347 930 bekannt.

Eine weitere aus der obengenannten DE-A-3 312 209 an sich bekannte Stufe JAB dient zur Impulsaufbereitung und liefert ein Signal UN für den Pulsdauer-Modulator PDM der Regelschaltung RS. Es ist weiterhin ein Strom-Spannungswandler SSW vorgesehen, der die Istwertsteuerung der Regelschaltung bildet und eine dem mit Ip bezeichneten Primärstrom proportionale Spannung UJp für den Pulsdauer-Modulator PDM liefert.

Zwischen der Impulsaufbereitungsstufe JAB und der Anlaufschaltungsstufe AS eine Koppelstufe K vorgesehen, wobei gleichzeitig die Impulsaufbereitungsstufe JAB nicht wie aus der DE-A-3 312 209 bekannt von der Wicklung W2, sondern von der Primärspannung +Vs angesteuert wird.

In der Impulsaufbereitungsstufe JAB wird zwischen zwei Referenzspannungen in Abhängigkeit von der Spannung Vs ein rampenförmiges Pulssignal gebildet, das in einem bestimmten Verhältnis zur Primärinduktivität Wp steht. Mit einer Änderung der Spannung Vs ändert sich auch der Primärstrom Ip durch die Primärwicklung Wp sowie die Rampe zwischen den Referenzspannungen in der Impulsaufbereitungsstufe JAB. Die Änderung der Anstiegswinkel des Stroms in der Primärwicklung Wp und der Rampe in der Impulsaufbereitungsstufe als Funktion der Spannung Vs ist konstant.

Durch die Koppelstufe K ist nun gewährleistet, daß der Anstiegswinkel der Rampe in der Impulsaufbereitungsstufe JAB als Funktion der Spannung Vs stärker steigt als der Anstiegswinkel des Stroms in der Primärwicklung Wp.

Durch die Koppelstufe K zwischen der Anlaufschaltungsstufe AS, deren Stromversorgung in einem linearen Verhältnis zu der Spannung Vs steht, sowie der Impulsaufbereitungsstufe JAB wird die Rampe über proportional verändert. Dadurch gelingt es, den Kollektorspitzenstrom im Transistor T von einem Maximalwert bei der minimalen Spannung Vs auf einen Minimalwert bei der maximalen Spannung Vs um einen Faktor 2 bis 3 zu reduzieren. Im gesamten Regelbereich der Netzwechselspannung wird daher die sekundäre Lastkurve von der gleichgerichteten Netzspannung Vs unabhängig.

Fig. 2 zeigt eine konkrete Ausführungsform einer erfindungsgemäßen Schaltungsanordnung für ein Sperrwandler Schaltnetzteil, wie es aus der EP-A-0 046 515 grundsätzlich bekannt ist. Es werden daher nur diejenigen Schaltungsteile der Fig. 2 erläutert, die für die erfindungsgemäße Schaltungsanordnung wesentlich sind.

Die Impulsaufbereitungsstufe JAB nach Fig. 1 wird in der Schaltungsanordnung nach Fig. 2 durch eine integrierte Sperrwandler-Schaltung IS zusammen mit einem RC-Glied R6, C6 gebildet. Die Anlaufschaltungsstufe AS nach Fig. 1 wird durch die Schaltelemente T20, R20, C20, G20 und G21 gebildet, wie dies grundsätzlich aus der DE-OS-3 347 930 bekannt ist.

Als Koppelschaltung ist gemäß der Erfindung die Reihenschaltung einer Zener-Diode G30 und eines Widerstandes R30 vorgesehen. Auf diese Weise wird es möglich, durch Wahl der an der Zener-Diode G30 abfallenden Konstantspannung den Spannungseinsatzpunkt der Rampenkorrektur und durch die Wahl des Wertes des Widerstandes R30 die Größe der Rampenkorrektur festzulegen.

Es ist darauf hinzuweisen, daß im Schaltnetzteil nach Fig. 1 ebenso wie in demjenigen nach Fig. 2 die Impulsaufbereitungsstufe JAB sowie die Anlaufschaltungsstufe AS aus getrennten Wicklungen des Transformators Tr, speziell aus der Primärwicklung Wp bzw. der Steuerwicklung W2 gespeist werden.

## Patentanspruch

Schaltungsanordnung zur Spitzenstromreduzierung in Abhängigkeit von der Netzspannung in einem Sperrwandler-Schaltnetzteil mit einem Transformator (Tr), dessen Primärwicklung (Wp) in Reihe zu einem elektronischen Schalter (T) liegt und mit einer von einer Steuerwicklung (W2) des Transformators (Tr) gespeisten Regelschaltung (RS) zur Steuerung des elektronischen Schalters (T), mit einer Impulsaufbereitungsstufe (IAB), die von der in der Primärwicklung (Wp) eingespeisten gleichgerichteten Netzwechselspannung (+Vs) angesteuert ist, dadurch gekennzeichnet, daß eine Anlaufschaltungsstufe (AS) vorgesehen ist, daß die Impulsaufbereitungsstufe (IAB) sowie die Anlaufschaltungsstufe (AS) durch eine spannungsvariable Koppelstufe (K) gekoppelt sind, und daß die Koppelstufe (K) durch die Reihenschaltung einer Zenerdiode (G30) und eines Widerstandes (R30) gebildet ist, wobei die Eingangsspannung der Koppelstufe (K) in einem linearen Verhältnis zur gleichgerichteten Netzwechselspannung (+Vs) steht.

## Claim

Circuit arrangement for reducing peak current in dependence on the mains voltage in a rectifier-switched-mode power supply having a transformer (Tr), the primary winding (Wp) of which is connected in series to an electronic switch (T) and having a control circuit (RS), which is supplied by a control winding (W2) of the transformer (Tr), for controlling the electronic switch (T), having a pulse processing stage (IAB) which is actuated by the rectified mains alternating voltage (+Vs) fed into the primary winding (Wp), characterized in that a start-up stage (AS) is provided, in that the pulse processing stage (IAB) and the start-up stage (AS) are connected via a variable voltage coupling stage (K), and in that the coupling stage (K), is formed by the series circuit of a Zener diode (G30) and a resistor (R30), the input voltage of the coupling stage (K) being in a linear relationship to the rectified mains alternating voltage (+Vs).

## Revendication

Montage pour réduire les pointes de courant en fonction de la tension du réseau dans un bloc d'alimentation réseau commuté à convertisseur de blocage, comportant un transformateur (Tr), dont l'enroulement primaire (Wp) est branché en série avec un interrupteur électronique (T), et un circuit de régulation (RS) alimenté par un enroulement de commande (W2) du transformateur (Tr) et servant à commander l'interrupteur électronique (T), et un étage (IAB) de préparation d'impulsions, qui est commandé par la tension alternative redressée du réseau (+Vs), introduite dans l'enroulement primaire (Wp), caractérisé par le fait qu'il est prévu un étage (AS) formant circuit de démarrage, que l'étage (IAB) de préparation des impulsions ainsi que l'étage (AS) formant circuit de démarrage sont accouplés par l'intermédiaire d'un étage de couplage (K) à tension variable, et que l'étage de couplage (K) est formé par le circuit série constitué par une diode Zener (G30) et une résistance (R30), la tension d'entrée de l'étage de couplage (K) étant liée, selon un rapport linéaire, à la tension alternative redressée du réseau (+Vs).

FIG 1

FIG 2